# EUROPEAN PATENT APPLICATION

(11) **EP 4 628 866 A1**
(43) Date of publication of application: **08.10.2025**
(21) Application number: 24773850.3
(22) Date of filing: 22.02.2024
(51) Int. Cl.: G01M 13/022, F16D 48/10, B60W 10/02

(54) **DETECTION METHOD AND APPARATUS FOR CLUTCH ENGAGEMENT POINT**

(30) Priority: 23.03.2023 CN 202310323291
(71) Applicant: Zhejiang Geely Holding Group Co., Ltd., Hangzhou, Zhejiang 310051 (CN); Yiwu Geely Automatic Transmission Co., Ltd., Yiwu Jinhua, Zhejiang 322003 (CN); Ningbo Geely Royal Engine Components Co., Ltd., Ningbo City, Zhejiang 315336 (CN); Aurobay Technology Co., Ltd, Ningbo, Zhejiang 315800 (CN)
(72) Inventor: GAO, Yang, Hangzhou, Zhejiang 310051 (CN); WANG, Ruiguang, Hangzhou, Zhejiang 310051 (CN); HUANG, Weishan, Hangzhou, Zhejiang 310051 (CN); LIU, Yiqiang, Hangzhou, Zhejiang 310051 (CN)
(74) Representative: Michalski Hüttermann & Partner Patentanwälte mbB
(86) International application number: PCT/CN2024/078048
(87) International publication number: WO 2024/193282

(57) **Abstract**

A method of detecting a clutch engagement point includes: in a disengaged state of a clutch, in response to a difference between rotational speeds of a driving part and a driven part of the clutch being a preset rotational speed difference, engaging the clutch (S11); and determining the clutch engagement point according to a first pressure value and a second pressure value of the clutch (S12), where the first pressure value is a pressure of the clutch upon an absolute value of a torque of the driving part or the driven part of the clutch reaches a first reference value and lasts for a first preset time period after the clutch is engaged, and the second pressure value is a pressure of the clutch upon the absolute value of the torque of the driving part or the driven part of the clutch reaches a second reference value and lasts for a second preset time period when the clutch is disengaged after engagement. An apparatus for detecting a clutch engagement point is further provided.

## Description

### TECHNICAL FIELD

This disclosure relates to vehicle engineering technologies, and in particular, to a method and apparatus for detecting a clutch engagement point.

### BACKGROUND

A clutch in a vehicle transmission may be engaged at a speed that may not have any impact on a vehicle from the time the clutch is fully disengaged until the clutch begins to be engaged. Before a clutch engagement point, the clutch may be controlled to engage at a fast speed, so as to quickly eliminate a gap of the clutch; and during a process from the engagement point to full engagement of the clutch, the clutch may be controlled to engage at a slow speed, so as to reduce a change in a vehicle speed caused by too fast a clutch engagement speed, thereby reducing the impact. If an identified clutch engagement point is lower than an actual clutch engagement point, the clutch begins to be engaged slowly upon reaching the identified clutch engagement point, at which time the clutch cannot transmit torque, resulting in delayed vehicle response. If the identified clutch engagement point is higher than the actual clutch engagement point, the clutch is engaged quickly before reaching the identified clutch engagement point, without slowing down when reaching the actual engagement point, and then the clutch engagement speed may have an impact on the vehicle. Therefore, it is particularly important to identify the clutch engagement point. At present, existing identification methods include: a method in which fluctuation in a rotational speed of an input shaft suddenly changes, a method in which a relative slip value reaches a specified threshold, a method in which a torque is increased to a certain value, and a method in which two torque values are used for calibration after the clutch has been engaged while the vehicle is stationary.

For the method in which fluctuation in a rotational speed of an input shaft suddenly changes, the method in which a relative slip value reaches a specified threshold, and the method in which a torque is increased to a certain value, the rotational speed and torque may change before the engagement point due to excessive drag torque, which is easy to misjudge the detection.

An applicable range of the method in which two torque values are used for calibration after the clutch has been engaged is limited to calculations in which the vehicle is stationary and the clutch engagement point is not specified.

### SUMMARY

The present disclosure provides a method and apparatus for detecting a clutch engagement point, applied to detection of clutch engagement points at different vehicle speeds.

The present disclosure provides a method of detecting a clutch engagement point, including:
in a disengaged state of a clutch, in response to a difference between rotational speeds of a driving part and a driven part of the clutch being a preset rotational speed difference, engaging the clutch; and
determining the clutch engagement point according to a first pressure value and a second pressure value of the clutch, where the first pressure value is a pressure of the clutch upon an absolute value of a torque of the driving part or the driven part of the clutch reaches a first reference value and lasts for a first preset time period after the clutch is engaged, and the second pressure value is a pressure of the clutch upon the absolute value of the torque of the driving part or the driven part of the clutch reaches a second reference value and lasts for a second preset time period when the clutch is disengaged after engagement.

In an example, determining the clutch engagement point according to the first pressure value and the second pressure value of the clutch includes:
using an absolute value of a difference between the first pressure value and the second pressure value of the clutch as a pressure at the clutch engagement point.

In an example, the first reference value is greater than the second reference value.

In an example, both the first reference value and the second reference value are greater than a drag torque.

The present disclosure provides an apparatus for detecting a clutch engagement point, including:
a speed sensor, configured for detecting rotational speeds of a driving part and a driven part of a clutch;
a pressure sensor, configured for detecting a pressure of the clutch;
a galvanometer, configured for detecting a current of a drive motor connected to the driving part of the clutch; and
a control mechanism, communicatively connected to the speed sensor, the pressure sensor, and the galvanometer, and configured for performing operations including:
   in a disengaged state of the clutch, in response to a difference between the rotational speeds of the driving part and the driven part of the clutch being a preset rotational speed difference, engaging the clutch; and
   determining the clutch engagement point according to a first pressure value and a second pressure value of the clutch, where the first pressure value is a pressure of the clutch upon an absolute value of a torque of the driving part of the clutch reaches a first reference value and lasts for a first preset time period after the clutch is engaged, and the second pressure value is a pressure of the clutch upon the absolute value of the torque of the driving part of the clutch reaches a second reference value and lasts for a second preset time period when the clutch is disengaged after engagement,
   where the torque of the driving part or the driven part of the clutch is calculated according to the current and the rotational speed of the driving part or the driven part of the clutch.

In an example, determining the clutch engagement point according to the first pressure value and the second pressure value of the clutch includes:
using an absolute value of a difference between the first pressure value and the second pressure value of the clutch as a pressure at the clutch engagement point.

In an example, the first reference value is greater than the second reference value.

In an example, both the first reference value and the second reference value are greater than a drag torque.

The present disclosure provides an apparatus for detecting a clutch engagement point, including:
a speed sensor, configured for detecting rotational speeds of a driving part and a driven part of a clutch;
a torque sensor, configured for detecting a torque of the driving part or the driven part of the clutch;
a pressure sensor, configured for detecting a pressure of the clutch; and
a control mechanism, communicatively connected to the speed sensor, the torque sensor, and the pressure sensor, and configured for performing operations including:
   in a disengaged state of the clutch, in response to a difference between the rotational speeds of the driving part and the driven part of the clutch being a preset rotational speed difference, engaging the clutch; and
   determining the clutch engagement point according to a first pressure value and a second pressure value of the clutch, where the first pressure value is a pressure of the clutch upon an absolute value of the torque of the driving part of the clutch reaches a first reference value and lasts for a first preset time period after the clutch is engaged, and the second pressure value is a pressure of the clutch upon the absolute value of the torque of the driving part of the clutch reaches a second reference value and lasts for a second preset time period when the clutch is disengaged after engagement.

In an example, determining the clutch engagement point according to the first pressure value and the second pressure value of the clutch includes:
using an absolute value of a difference between the first pressure value and the second pressure value of the clutch as a pressure at the clutch engagement point.

Compared with the related art, the present disclosure includes: disengaging the clutch, and then generating a fixed slip between the driving part and the driven part of the clutch; increasing the rotational speeds of the driving part and the driven part of the clutch as the vehicle speed increases, and then engaging the clutch at a fixed speed; when it is detected that the absolute value of the torque of the driving part of the clutch reaches a reference value Tq_a and lasts for a period of time, reading the actual pressure P_a of the clutch, and then disengaging the clutch at a fixed speed; and when it is detected that the absolute value of the torque of the driving part of the clutch reaches a reference value Tq_b and lasts for a period of time, reading the actual pressure P_b of the clutch, at which time the pressure P_kp at the clutch engagement point satisfies: P_kp = P_a-P_b, where identification of the engagement point can be performed during operation of the vehicle, and is not affected by the vehicle speed.

In an implementation of embodiments of the present disclosure, the torque at the clutch engagement point is an absolute value of a difference between Tq_b and Tq_a, and both torque values Tq_b and Tq_a are greater than the drag torque, so that the engagement point is identified under conditions where an influence of the drag torque is eliminated.

However, any product implementing the present disclosure does not necessarily need to achieve all of the advantages described above at the same time.

Other features and advantages of the present disclosure will be set forth in the following description, and in part, will become apparent from the description, or be understood by implementation of the present disclosure. Other advantages of the present disclosure may be realized and obtained by the solutions described in the specification and the accompanying drawings.

### BRIEF DESCRIPTION OF DRAWINGS

Accompanying drawings are used to provide an understanding of technical solutions of the present disclosure, constitute a part of the specification, and are used to explain the technical solutions of the present disclosure in conjunction with the embodiments of the present disclosure, but do not constitute a limitation on the technical solutions of the present disclosure.
FIG. 1 is a schematic structural diagram of a clutch in the related art.
FIG. 2 is a flowchart of a method of detecting a clutch engagement point according to an embodiment of the present disclosure.
FIG. 3 is a flowchart of a method of detecting a clutch engagement point according to another embodiment of the present disclosure.
FIG. 4 is a schematic diagram of an apparatus for detecting a clutch engagement point according to an embodiment of the present disclosure.

### DETAILED DESCRIPTION

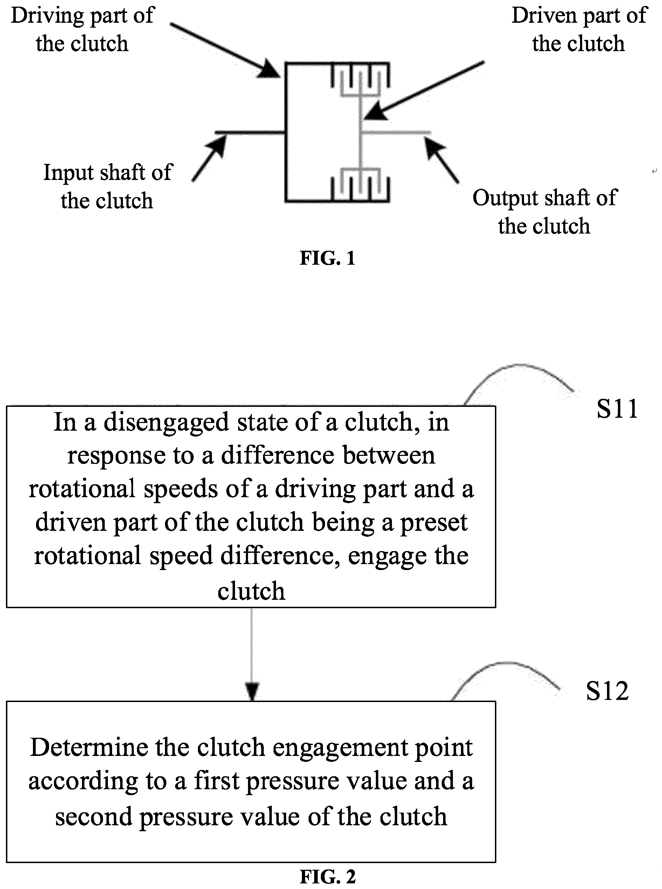

FIG. 1 is a flowchart of a method of detecting a clutch engagement point according to an embodiment of the present disclosure. As shown in FIG. 1, a method of detecting a clutch engagement point according to this embodiment includes steps S11 and S12.

At step S11, in a disengaged state of a clutch, in response to a difference between rotational speeds of a driving part and a driven part of the clutch being a preset rotational speed difference, the clutch is engaged.

At step S12, the clutch engagement point is determined according to a first pressure value and a second pressure value of the clutch.

The above clutch is a wet clutch. The driving part of the clutch can be maintained at a fixed rotational speed. The driven part of the clutch is rigidly connected with a wheel, and the rotational speed of the driven part of the clutch varies with a vehicle speed. An engagement speed of the clutch is controllable.

At step S11, the preset rotational speed difference of the clutch may be 500 rpm. For example, the rotational speed of the driving part is 500 rpm, the rotational speed of the driven part is 0 rpm, and the difference between the rotational speeds of the driving part and the driven part is 500 rpm. For another example, the rotational speed of the driving part is 600 rpm, the rotational speed of the driven part is 100 rpm, and the difference between the rotational speeds of the driving part and the driven part is still 500 rpm.

At step S12, the first pressure value is a pressure of the clutch upon an absolute value of a torque of the driving part or the driven part of the clutch reaches a first reference value and lasts for a first preset time period after the clutch is engaged; and the second pressure value is a pressure of the clutch upon the absolute value of the torque of the driving part or the driven part of the clutch reaches a second reference value and lasts for a second preset time period when the clutch is disengaged after engagement.

The first preset time period may be 0.5 seconds, and the second preset time period may be 0.5 seconds.

In an example, determining the clutch engagement point according to the first pressure value and the second pressure value of the clutch includes:
using an absolute value of a difference between the first pressure value and the second pressure value of the clutch as a pressure at the clutch engagement point.

In an example, the first reference value is greater than the second reference value.

In an example, both the first reference value and the second reference value are greater than a drag torque.

In the embodiments of the present disclosure, in the disengaged state of the clutch, when the difference between the rotational speeds of the driving part and the driven part of the clutch is the preset rotational speed difference, the clutch is engaged; and the clutch engagement point is determined according to the first pressure value and the second pressure value of the clutch. The embodiments of the present disclosure is applicable to detection of clutch engagement points at different vehicle speeds.

In the embodiments of the present disclosure, both the first reference value and the second reference value are greater than the drag torque, so that the engagement point can be identified under conditions where an influence of the drag torque is eliminated.

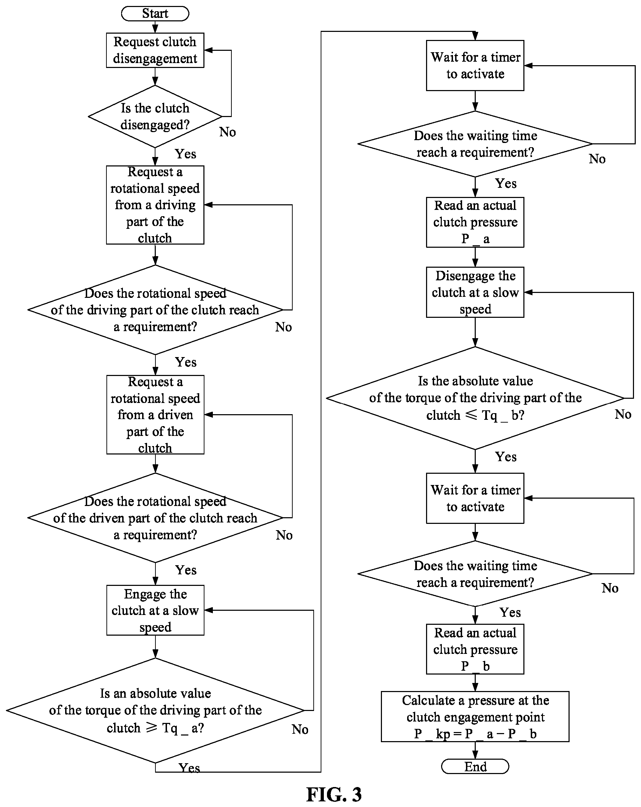

FIG. 3 is a flowchart of a method of detecting a clutch engagement point according to another embodiment of the present disclosure. As shown in FIG. 3, the method includes the following steps:
A) sending a clutch disengagement request to a control mechanism;
B) after the clutch is disengaged, requesting a driving part of the clutch to be maintained at a rotational speed, and the rotational speed of the driving part of the clutch to vary with a vehicle speed;
C) when the rotational speed of the driving part of the clutch is reached, requesting the rotational speed of the driving part of the clutch to vary with the vehicle speed, so that a fixed rotational speed difference is generated between the driving part and the driven part of the clutch;
D) engaging the clutch at a slow fixed speed;
E) making an absolute value of a torque generated by the driving part of the clutch reach a reference value Tq_a, where an absolute value of Tq_a is greater than a drag torque;
F) maintaining this torque Tq_a for a period of time;
G) reading an actual pressure P_a of the clutch at this time;
H) disengaging the clutch at a slow fixed speed;
I) making the absolute value of the torque generated by the driving part of the clutch reach a reference value Tq_b, where an absolute value of Tq_b is greater than the drag torque;
J) maintaining this torque Tq_b for a period of time;
K) reading an actual pressure P_b of the clutch at this time; and
L) calculating a pressure at the clutch engagement point P_kp = P_a - P_b.

The slow fixed speed at which the clutch is engaged may be an engagement speed at which the clutch produces an increment of approximately 10 Nm per second.

A torque at the clutch engagement point is (Tq_a - Tq_b), so the pressure at the clutch engagement point is (P_a - P_b).

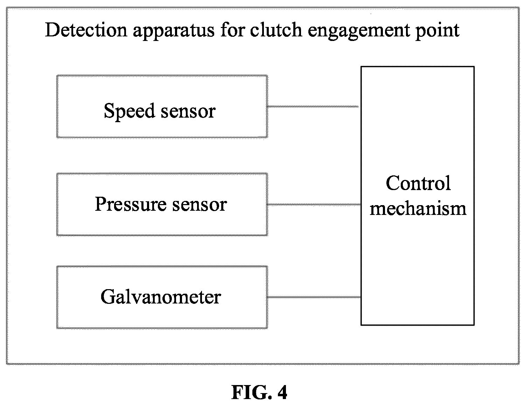

As shown in FIG. 4, the present disclosure further discloses an apparatus for detecting a clutch engagement point, including:
a speed sensor, configured for detecting rotational speeds of a driving part and a driven part of a clutch;
a pressure sensor, configured for detecting a pressure of the clutch;
a galvanometer, configured for detecting a current of a drive motor connected to the driving part of the clutch; and
a control mechanism, communicatively connected to the speed sensor, the pressure sensor, and the galvanometer, and configured for performing the following operations:
   in a disengaged state of the clutch, in response to a difference between the rotational speeds of the driving part and the driven part of the clutch being a preset rotational speed difference, engaging the clutch; and
   determining the clutch engagement point according to a first pressure value and a second pressure value of the clutch, where the first pressure value is a pressure of the clutch upon an absolute value of a torque of the driving part of the clutch reaches a first reference value and lasts for a first preset time period after the clutch is engaged, and the second pressure value is a pressure of the clutch upon the absolute value of the torque of the driving part of the clutch reaches a second reference value and lasts for a second preset time period when the clutch is disengaged after engagement,
   where the torque of the driving part or the driven part of the clutch is calculated according to the current and the rotational speed of the driving part or the driven part of the clutch.

In an example, determining the clutch engagement point according to the first pressure value and the second pressure value of the clutch includes:
using an absolute value of a difference between the first pressure value and the second pressure value of the clutch as a pressure at the clutch engagement point.

In an example, the first reference value is greater than the second reference value.

In an example, both the first reference value and the second reference value are greater than a drag torque.

In an embodiment of the present disclosure, the clutch is first pressed through the engagement point, and then the clutch is slowly disengaged. During this process, the torque transmitted by the clutch is always greater than the drag torque, and the difference between the two pressures at which different torques are generated is used as the pressure at the engagement point. In this case, the pressure at the engagement point can be obtained under conditions where an influence of the drag torque is eliminated at different vehicle speeds.

The present disclosure further discloses another apparatus for detecting a clutch engagement point, including:
a speed sensor, configured for detecting rotational speeds of a driving part and a driven part of a clutch;
a torque sensor, configured for detecting a torque of the driving part or the driven part of the clutch;
a pressure sensor, configured for detecting a pressure of the clutch; and
a control mechanism, communicatively connected to the speed sensor, the torque sensor, and the pressure sensor, and configured for performing the following operations:
   in a disengaged state of the clutch, in response to a difference between the rotational speeds of the driving part and the driven part of the clutch being a preset rotational speed difference, engaging the clutch; and
   determining the clutch engagement point according to a first pressure value and a second pressure value of the clutch, where the first pressure value is a pressure of the clutch upon an absolute value of a torque of the driving part of the clutch reaches a first reference value and lasts for a first preset time period after the clutch is engaged, and the second pressure value is a pressure of the clutch upon the absolute value of the torque of the driving part of the clutch reaches a second reference value and lasts for a second preset time period when the clutch is disengaged after engagement.

In an example, determining the clutch engagement point according to the first pressure value and the second pressure value of the clutch includes:
using an absolute value of a difference between the first pressure value and the second pressure value of the clutch as a pressure at the clutch engagement point.

While various embodiments have been described in the present disclosure, the description is intended to be exemplary, rather than limiting. And, it will be apparent to those of ordinary skill in the art that many more embodiments and implementations are possible within the scope of the embodiments described herein. Although many possible combinations of features have been shown in the drawings and discussed in the detailed description, many other combinations of the disclosed features are possible. Unless specifically limited, any feature or element in any embodiment may be used in combination with or in place of any other feature or element in any other embodiment.

The present disclosure includes and contemplates combinations of features and elements known to those of ordinary skill in the art. The embodiments, features, and elements that have been disclosed in this disclosure may also be combined with any conventional features or elements to form a unique inventive aspect as defined by the claims. Any feature or element in any embodiment may also be combined with features or elements from other inventive aspects to form another unique inventive aspect as defined by the claims. Therefore, it should be understood that any of the features shown and/or discussed in the present disclosure may be implemented individually or in any suitable combination. Accordingly, the embodiments are not otherwise limited except in light of the appended claims and their equivalent substitutions. Also, various modifications and changes may be made within the scope of protection of the appended claims.

Further, in describing representative embodiments, the specification may have presented a method and/or process as a particular sequence of steps. However, to the extent that the method or process does not rely on a particular order of steps described herein, the method or process should not be limited to the particular order of steps described. As will be appreciated by those of ordinary skill in the art, other orders of steps may be possible. Therefore, the particular order of the steps set forth in the specification should not be construed as limitations on the claims. In addition, the claims directed to the method and/or process should not be limited to the performance of their steps in the order written, and those of skill in the art can readily appreciate that these orders may be varied and still remain within the spirit and scope of the embodiments of the present disclosure.

Those of ordinary skill in the art may understand that all or some of steps in methods, and functional modules/units in systems and apparatuses disclosed above may be implemented as software, firmware, hardware, and appropriate combinations thereof. In hardware implementations, the division between functional modules/units mentioned in the above description does not necessarily correspond to the division of physical components; for example, one physical component may have multiple functions, or one function or step may be performed cooperatively by several physical components. Some or all of the components may be implemented as software executed by a processor, such as a digital signal processor or microprocessor, or be implemented as hardware, or be implemented as an integrated circuit, such as a specific integrated circuit. Such software may be distributed on a computer-readable medium, which may include a computer storage medium (or non-transitory medium) and a communication medium (or transitory medium). As is well known to those of ordinary skill in the art, the term "computer storage medium" includes volatile and non-volatile, removable and non-removable media implemented in any method or technology for storing information (such as computer-readable instructions, data structures, program modules, or other data). The computer storage medium includes, but is not limited to, RAM, ROM, EEPROM, flash memory or other memory technology, CD-ROM, digital versatile disk (DVD) or other optical disk storage, magnetic cassette, magnetic tape, magnetic disk storage or other magnetic storage device, or any other medium that can be used to store desired information and can be accessed by a computer. In addition, it is well known to those of ordinary skill in the art that the communication medium typically contains computer-readable instructions, data structures, program modules, or other data in a modulated data signal such as a carrier wave or other transmission mechanism, and may include any information delivery medium.

## Claims

1. A method of detecting a clutch engagement point, comprising:
in a disengaged state of a clutch, in response to a difference between rotational speeds of a driving part and a driven part of the clutch being a preset rotational speed difference, engaging the clutch; and
determining the clutch engagement point according to a first pressure value and a second pressure value of the clutch, wherein the first pressure value is a pressure of the clutch upon an absolute value of a torque of the driving part or the driven part of the clutch reaches a first reference value and lasts for a first preset time period after the clutch is engaged, and the second pressure value is a pressure of the clutch upon the absolute value of the torque of the driving part or the driven part of the clutch reaches a second reference value and lasts for a second preset time period when the clutch is disengaged after engagement.

2. The method according to claim 1, wherein
determining the clutch engagement point according to the first pressure value and the second pressure value of the clutch comprises:
using an absolute value of a difference between the first pressure value and the second pressure value of the clutch as a pressure at the clutch engagement point.

3. The method according to claim 1, wherein
the first reference value is greater than the second reference value.

4. The method according to claim 3, wherein
the first reference value and the second reference value are both greater than a drag torque.

5. An apparatus for detecting a clutch engagement point, comprising:
a speed sensor, configured for detecting rotational speeds of a driving part and a driven part of a clutch;
a pressure sensor, configured for detecting a pressure of the clutch;
a galvanometer, configured for detecting a current of a drive motor connected to the driving part of the clutch; and
a control mechanism, communicatively connected to the speed sensor, the pressure sensor, and the galvanometer, and configured for performing operations comprising:
in a disengaged state of the clutch, in response to a difference between the rotational speeds of the driving part and the driven part of the clutch being a preset rotational speed difference, engaging the clutch; and
determining the clutch engagement point according to a first pressure value and a second pressure value of the clutch, wherein the first pressure value is a pressure of the clutch upon an absolute value of a torque of the driving part of the clutch reaches a first reference value and lasts for a first preset time period after the clutch is engaged, and the second pressure value is a pressure of the clutch upon the absolute value of the torque of the driving part of the clutch reaches a second reference value and lasts for a second preset time period when the clutch is disengaged after engagement,
where the torque of the driving part or the driven part of the clutch is calculated according to the current and the rotational speed of the driving part or the driven part of the clutch.

6. The apparatus according to claim 5, wherein
determining the clutch engagement point according to the first pressure value and the second pressure value of the clutch comprises:
using an absolute value of a difference between the first pressure value and the second pressure value of the clutch as a pressure at the clutch engagement point.

7. The apparatus according to claim 5, wherein
the first reference value is greater than the second reference value.

8. The apparatus according to claim 7, wherein
the first reference value and the second reference value are both greater than a drag torque.

9. An apparatus for detecting a clutch engagement point, comprising:
a speed sensor, configured for detecting rotational speeds of a driving part and a driven part of a clutch;
a torque sensor, configured for detecting a torque of the driving part or the driven part of the clutch;
a pressure sensor, configured for detecting a pressure of the clutch; and
a control mechanism, communicatively connected to the speed sensor, the torque sensor, and the pressure sensor, and configured for performing operations comprising:
in a disengaged state of the clutch, in response to a difference between the rotational speeds of the driving part and the driven part of the clutch being a preset rotational speed difference, engaging the clutch; and
determining the clutch engagement point according to a first pressure value and a second pressure value of the clutch, wherein the first pressure value is a pressure of the clutch upon an absolute value of the torque of the driving part of the clutch reaches a first reference value and lasts for a first preset time period after the clutch is engaged, and the second pressure value is a pressure of the clutch upon the absolute value of the torque of the driving part of the clutch reaches a second reference value and lasts for a second preset time period when the clutch is disengaged after engagement.

10. The apparatus according to claim 9, wherein
determining the clutch engagement point according to the first pressure value and the second pressure value of the clutch comprises:
using an absolute value of a difference between the first pressure value and the second pressure value of the clutch as a pressure at the clutch engagement point.
